# EUROPEAN PATENT SPECIFICATION

(11) **EP 2 278 356 B1**
(45) Date of publication and mention of the grant of the patent: **09.10.2013**
(21) Application number: 09164442.7
(22) Date of filing: 02.07.2009
(51) Int. Cl.: G01S 15/04, H04M 1/60

(54) **Apparatus and method for detecting usage profiles of mobile devices**
Vorrichtung und Verfahren zum Erkennen von Nutzungsprofilen in mobilen Vorrichtungen
Appareil et procédé de détection de profils d'utilisation de dispositifs mobiles

(43) Date of publication of application: 26.01.2011
(73) Proprietor: Knowles Electronics Asia PTE. Ltd., Singapore, 160050 (SG)
(72) Inventor: Langereis, Geert, 5656 AE Eindhoven (NL)
(74) Representative: Röggla, Harald

(56) References cited:
- EP-A- 1 174 732
- US-A1- 2004 141 418

## Description

### FIELD OF THE INVENTION

The present invention in general relates to a method and arrangements for estimating the position of an electronic device such as a mobile phone relative to the user. In particular, the present invention relates to a method and arrangements for estimating if a mobile phone is placed next to an ear or in front of the user.

### BACKGROUND OF THE INVENTION

Mobile phones and other handheld devices are getting smarter and smarter. For instance, the equipment or device is able to anticipate activities of the user thus instead of the user having to operate the device in order to adjust its settings to a new situation and/or position, "intelligent" functions, often featured by sensors, automatically adjust the settings of the device. For example, handheld devices are known having displays the content displayed on which rotates when the device is being rotated. Besides enabling features like this, sensing of the usage is especially essential for power saving mechanisms. Since battery lifecycle and standby time are critical properties among mobile devices, a standard procedure to automatically execute is switching off the display and keypad illumination of a mobile phone during a call, since a phone which is held next to a user's ear does not need a powered display. In view of that, it is essential to detect the actual situation of usage of the phone.

Known mobile phones generally comprise a keypad for making inputs to the phone, a display for visual feedback from the phone to the user, a processor for running the operation system and processing all the featured operations, storage means (e.g. RAM/ROM) for storing data of the operation system and other data, at least one loudspeaker (sometimes called receiver) for signalling of ring-tones as well as for outputting of the other party's voice and at least one microphone for reception of the users voice, respectively, during a conversation, and at least one antenna for sending and receiving of electro-magnetic signals.

Recently, other features have become standard elements of mobile phones, such as photo and video camera, short-range-radio-data-exchange means, internet-browser, email client, hands-free-call capability etc., and thus, more and more different usage situations occur for the devices.

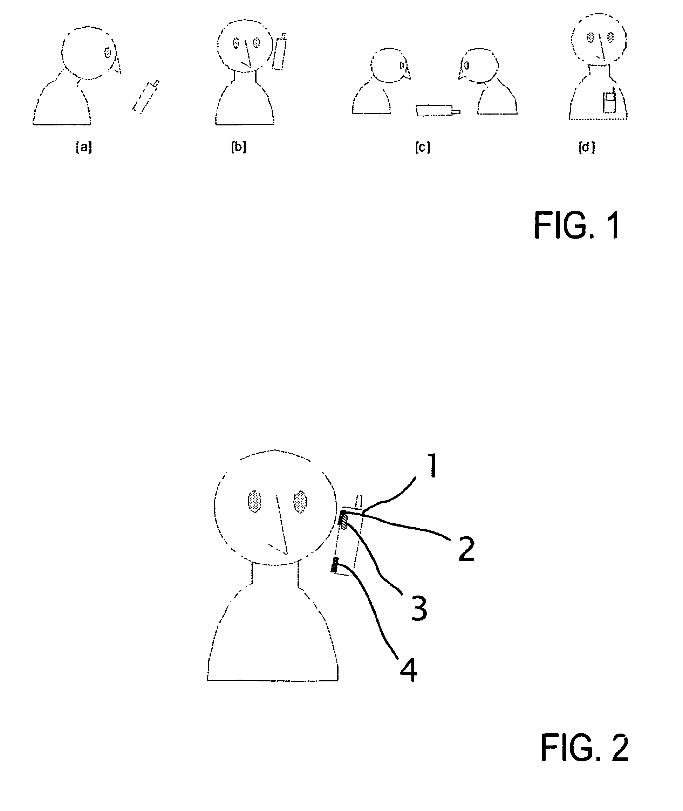

Four typical user scenarios for usage of a mobile phone are depicted in Fig. 1 denoted by a) to d). In situation a) the mobile phone is in front of the user's head, while the user is watching the display. In this situation the user can navigate through the mobile phone's menu, look for certain functions or browse through the internet, if featured. Another typical situation where the depicted position of the mobile phone is likely to occur is when due to an incoming call, the user is about to answer the call. In these situations neglecting single fingers of the user on the keypad, the front of the mobile phone is generally uncovered and since the user is interacting with the mobile phone, the illumination of the display is on.

In situation b) the mobile phone is at a user's ear, which is the normal position of a mobile phone during a call. The front side of the mobile phone, in particular the portion or part containing the loudspeaker is pressed against a user's ear. Since the user cannot look at the display anyway, the illumination of the display and the keypad may be turned off. In case the phone comprises a touch screen, the input function is also disabled in order to prevent the user's ear from causing unwanted inputs to the phone. After terminating the call, the mobile phone may be positioned according to situation a), and the user will be watching the display of the mobile phone again in order to browse the menu, look up names or addresses, start another call or simply lock the keypad for example.

In situation c) the mobile phone is put on a horizontal surface, e.g. a table or desk, which is likely to occur, when the mobile phone is used for a hands-free call and the loudspeaker is driven at high volumes. Users present in such hand-free call situations are able to look at the display of the mobile phone, browse through the menu and make inputs into the mobile phone, for example. In case of a video call, moving images of the dialogue partner, documents, or presentations might be displayed on the display of the mobile phone, which display is to be illuminated in this situation. Regardless occasional key pad inputs, the front of the mobile phone, especially the region where the loudspeaker is located, remains generally uncovered.

Situation d) shows the mobile phone in the user's pocket. This is the normal standby situation where no interaction from the user with the mobile phone is taking place, and thus the display illumination is switched off.

Last but not least a not depicted situation, which is similar to situation d), is a mobile phone put on a table or elsewhere in the standby mode.

One sensor applicable to distinguish some of the mobile devices' actual positions is a proximity sensor, which measures some of the clues for the user scenario. The proximity sensor may detect an object, e.g. a human's head or ear, table-top etc., in front of the user interface of the phone. Additionally, a gravitational force sensor, i.e. accelerometer, can provide the horizontal or vertical position of the phone as a further clue. However, neither the proximity sensor nor the gravitational force sensor is capable to detect, whether the phone is held next to the ear during a call or in front of a face to watch the display.

Known concepts to cope with the challenge of detecting the usage situation of mobile devices are to provide light sensors and/or ultrasonic actuators/sensors in such devices. If the mobile device is held at a user's ear, the light sensor is exposed to less light and/or the distance measured by the ultrasonic sensors falls below a certain threshold value, respectively and thus the display is switched off.

US 6,542.436 discloses a single-speaker-single-microphone detection arrangement for detecting if an object is in proximity to the device. Audio transducers already found in the device are used to realize the detection function, along with digital signal processing or equivalent means. For the proximity sensing a measurement signal is generated for driving an output acoustic transducer of the device. Then an input acoustic transducer of the device is monitored to detect the measurement signal; and determining that an object is in proximity to the device based on a detected alteration of the measurement signal.

US2004/0141418 describes a speaker distance detection apparatus and method using a microphone array, for detecting the distance between a speaker and a small terminal such as a mobile telephone, and a speech input/output apparatus using the method. The speaker distance detection apparatus uses a microphone array composed of a plurality of microphones, .previously determines a reference microphone to be a reference among a plurality of microphones, detects differences between a signal level of the reference microphone and signal levels of the other microphones, based on correlations between signals in the respective microphone, and determines the distance from the microphone array to the speaker based on the detected signal level difference.

Since mobile devices such as mobile phones are produced in mass production, hardware and production costs are to be reduced as far as possible. Thus, expensive additional actuator/sensor arrangements for estimating the proximity of a device e.g. to a user's ear significantly lower the sales margins of such devices. Additionally, operation of said actuator/sensor arrangements and processing of the information provided by these must be as energy efficient as possible in order to save battery and performance power.

### SUMMARY OF THE INVENTION

The invention is defined in the accompanying claims.

An embodiment of the invention can provide a method and/or an arrangement which enables omitting expensive distinct actuator/sensor arrangements for estimating the proximity of a device to a user's car and which is almost independent from the geometric restrictions of the device.

Accordingly, the proximity sensor arrangement comprises at least one first and at least one second acoustic transducer and at least one comparing means. The acoustic transducers, which additionally may fulfil other functions of the electronic device, are adapted to receive acoustic signals and convert the received acoustic signals into electric signals. The comparing means or comparing unit are arranged to compare a spectral part of the spectrum above a predetermined cut-off frequency of the signal received by the first acoustic transducer with a spectral pan of the spectrum above the predetermined cut-off frequency of the signal received by the second acoustic transducer.

The proximity sensor arrangement can especially be employed as a sensor arrangement for sensing particular coverage situations of one of the acoustic transducers in view of the other acoustic transducer, which coverage may be caused by a certain acoustical spectral damping of the received signal since the acoustic damping corresponds e.g. to the typical damping caused by adjacency of human tissue.

A method according to an embodiment of the invention comprises the receiving an acoustic signal via a first transfer path with the first acoustic transducer and via a second transfer path with a second acoustic transducer. The acoustic transducers are located in a predetermined distance of each other, for instance in the interior of an electronic device. The received acoustic signals are converted into electric signals. Subsequently, the actual proximity and/or coverage situation is deduced from the spectral difference between the electric signals.

According to an embodiment of the invention, there can be provided a computer program product comprising instructions adapted to be executed on a programmable processor for performing the proposed method for estimating the degree of coverage of a first acoustic transducer. Additional hardware elements or components such as loudspeaker(s) and/or microphone(s) and filters present in an electronic device, in which the computer program is implemented, may provide the required signals to the processor as input for the computer program. In this regard, it is worth to be noted that the computer program product may be contained or embodied on a data carrier medium such as the following not exhaustive examples, a hard disk, an optical disc (e.g. CD, DVD), memory key or memory stick.

The basic idea of the present invention resides in using the effect of different acoustic transfer functions between at least one acoustic source and at least two acoustic sinks, which may be located in an electronic device, for evaluation of the position of one of the acoustic transducers relative to a user's head. In other words, the inventors have perceived that a coverage situation of one of the acoustic transducers in relation to the at least one other acoustic transducer can be deduced by a comparison of predetermined parts of the respective acoustic spectrum received at the respective acoustic transducer. Accordingly, in case of a portable device such as a mobile phone, the method may use two acoustic transducers such as microphones, of which one may be the one at the conventional location in the bottom (connector) of the portable device and another microphone, being located next to the conventional loudspeaker (ear-piece). Thus, the decision whether the device is held adjacent to a user's head/ear or not, can be made based on the difference in the predetermined parts of the spectra of the acoustic signals at the microphone and the other microphone.

In one embodiment the comparing means of the proximity sensor arrangement do not evaluate the electrical signal spectra as such but values representing the energy of certain spectral components or a certain spectral part of the signals. This way, no complex signal analysis is required and processing power can be saved. Spectral components can be divided by filtering means such as discrete filters alike common RC-members , and the contained signal energy can be compared to the corresponding spectral component of another electric signal. For instance, rectification of the respective certain spectral components or a certain spectral part of the respective signals may produce a signal that corresponds to the energy contained therein.

In a further development at least one third acoustic transducer is located close or adjacent to one of the at least one first or at least one second acoustic transducers. In this context "close to" or "adjacent to" is to be understood in relation to the dimensions of the electronic device. In typical applications "close to" or "adjacent to" means in particular not more than two centimetres away from said at least one first or said at least one second acoustic transducer. This way, it is possible, in case of a mobile phone as the electronic device, to ensure that a user during a phone call covering by purpose the third acoustic transducer with his ear in order to listen to the voice of his dialogue partner, also covers the at least one first or at least one second acoustic transducer located close to the third acoustic transducer. Thus during a normal phone call, the acoustic reception condition of the at least one first or at least one second acoustic transducer is acoustically damped.

In certain embodiments one of the at least one first and at least one second acoustic transducers is located together with at least one further acoustic transducer as one component in a common housing, resulting in a compact component being easier to handle and lowering the necessary successive assembly steps.

Particular embodiments further comprise an electric filter arrangement adapted to filter the signal received by the at least one first and second acoustic transducers. By applying electric filter arrangements, a predetermined part of the spectra of the signals may be extracted for the further processing as mentioned above. In certain embodiments the electric filter arrangement has the characteristics of a high-pass filter to focus the difference between the acoustic signal received by the acoustically damped acoustic transducer and the signal received by at least one other undamped acoustic transducer, which thus may serve as reference. In the particular case of a mobile phone as electronic device, the reception condition of an acoustic transducer located close to a speaker of the phone will be damped by the damping characteristics of the human tissue, e.g. from the cheek and ear. So, it has been found that the phenomenon, that especially the high frequencies of the acoustically damped signal are faded out, can be used for determining the position of a handheld device in relation to a user.

It is worth to be noted that measurement and comparison of acoustic signals may be done on signals with a large variety regarding timing, sound pressure levels and intensities. Thus, the comparison must be relative to compensate for sound intensity variations, for example due to the speaking distance, spectral constitution as well as volume of the user's voice and ambient noise. Thus a normalization operation may be performed e.g. by dividing the predetermined portions or parts of the acoustic spectra to be compared by a value representing the energy of the entire respective signal or any other appropriate reference value. The damping characteristic of the human tissue according to measurements performed by the present inventors corresponds to an acoustic low-pass with a cut-off frequency in the range of 1-3 kHz. Thus the cut-off frequency of the electric filter arrangement should also be in this frequency range, for example at 2 kHz.

In another embodiment the at least two acoustic transducers are adapted to at least partially operate in the audible sound range. In the next years, the number of such adapted acoustic transducers employed per mobile device is expected to grow in order to enable acoustical directivity sensing, e.g. to locate a speaker or a sound source in a conferencing mode of the device. Thus, requirement of such elements for implementation of the herein proposed solution does not necessarily mean additional hardware complexity. Only the signals of appropriate acoustic transducers installed in the device anyway have to be combined or analyzed, respectively.

A particular advantageous use of the proximity sensor arrangement is in a mobile and/or portable electronic device, in particular a mobile phone or cell(ular) phone. The first and second acoustic transducers can be arranged on strategic positions with regard to the use situations of the mobile phone to be detected. Accordingly, the first transducer, in particular being an acoustic sensor such as a microphone, may be located within the mobile phone close to a third transducer in particular an acoustic actor such as a loudspeaker, in the top part of the mobile phone, whilst the second transducer, in particular an acoustic sensor such as a microphone is located in a predetermined distance to the first transducer, in the lower part of the mobile phone In this connection it may be noted, that the "lower part" of the phone is to be understood as the section of the phone during a hand-held call, which faces to the shoulder or chin of the user. Accordingly, the opposite end with respect to the lower part of the phone, which during a hand-held call faces away from the shoulder or chin of the user, may be understood as the "top part" of the phone. Thus, by means of the proximity sensing arrangement the use situation of the mobile phone such as hand-held and hands-free use situation during a phone call can be sensed based on the coverage condition of the first transducer, in particular in comparison to the second transducer

Since the number of speakers and microphones in today's mobile phones is rising and thus mobile phones comprising nearly all of the required hardware for implementation of a proximity sensor arrangement as herein proposed, only the logical components in the mobile phone are to be adapted to perform the required processing steps on the received signals. Accordingly, once the proximity sensing arrangement, e.g during a call is deducing that the mobile device is in a covered situation (situation b) in Fig 1), this situation-related information can be passed to a processor of the device, which is besides other tasks in control of the device's operating system. Thus, the processor can for example dim the display backlight or entirely switch off the display Additionally, if featured, a keypad illumination may be switched off and/or a touch sensitive input means of the mobile device are disabled. If the device subsequently is removed out of the proximity of for example a user s ear, this information again may be forwarded to the processor, which can turn on the display and/or the touch sensitive input means of the mobile device and their respective illumination. Moreover, a volume of a signal driving a speaker of the phone may be set m accordance to the detected mode of operation. It would also be possible to select, modify, or tune an audio processing technique.

A method according to an embodiment of the invention may comprise comparing the spectral difference or predetermined spectral parts of the electric signals or a value corresponding to the energy contained in predetermined spectral parts of the electric signals and a pre-defined threshold value indicating a critical degree of coverage. Subsequently, based on said comparison step the actual coverage situation can be determined.

Accordingly, the degree of coverage may correspond to an acoustical damping by adjacency of human tissue, for example the user's head or a user's ear, leading to a drop of signal energy especially at high frequencies. As explained in connection with the proximity sensor arrangement above the spectra of the electric signals may be derived applying filter arrangements like RC-elements. Those skilled in the art know how to measure or estimate values representing the energy contained in these spectrum portions by applying corresponding circuitry and/or signal processing means.

### BRIEF DESCRIPTION OF THE DRAWINGS

The present invention is further elucidated by the following figures and examples which are not intended to limit the scope of the invention. The person skilled in the art will understand that various embodiments may be combined.

These and other aspects of the invention will be apparent from and elucidated with reference to the embodiment(s) described hereinafter. In the following drawings, the figures are schematically drawn and not true to scale, and identical reference numerals in different figures, if any may refer to corresponding elements. It will be clear for those skilled in the art that alternative but equivalent embodiments of the invention are possible without deviating from the true inventive concept, and that the scope of the invention is limited by the claims only.
Fig. 1 illustrates four (a to d) typical user scenario's of usage of a mobile phone;
Fig. 2 depicts a mobile phone in one typical position to a user's head;
Fig. 3 is a schematic diagram of low-pass filtering effect due to a head in front of a microphone;
Fig. 4 illustrates two measurements done according to setups depicted in Fig. 4a and 4b with a single microphone;
Fig. 4a illustrates a measurement setup with an uncovered microphone;
Fig. 4b illustrates a measurement setup with an uncovered microphone;
Fig. 5 depicts a flow-chart showing the basic steps of the method according to the present invention; and
Fig 6 depicts a block diagram of the main elements in a mobile phone regarding the present invention.

### DETAILED DESCRIPTION OF EMBODIMENTS

Now reference is made to **Fig. 2****,** which depicts a mobile phone, as an example for an electronic device, in which the present invention may be used. The mobile phone is shown in a first typical position to a user's head (corresponding to Fig. 1 [b]), in which one microphone 4, corresponding to e.g. the first acoustic transducer of the invention, is placed at the normal position in the lower half of the mobile phone 1. A loudspeaker 2, corresponding to the third acoustic transducer of the invention, is positioned next to the user's ear.

According to one aspect of the present invention it is proposed to place a secondary microphone 3, i.e. an audio sensor, corresponding to the second transducer of the invention, next to the loudspeaker 2. As mentioned above, the loudspeaker 2 and the secondary microphone 3 may be situated in the same housing thus constituting one compact component.

When speaking via the mobile phone 1 in this position, the microphone 4 will receive the undistorted sound. In addition, the secondary microphone 3 will receive a distorted sound because the sound is damped by the head in front of the microphone 3. The damping comprises a low-pass filtering characteristic due to the sound absorbing behaviour of the human skin and head. Note that also a hard solid object in an acoustic field will change the acoustical spectrum due to the frequency dependent alteration of the sound fields. Accordingly, there will be a spectral difference in the electrical outputs of both microphones.

When using the secondary microphone 3 in a conferencing mode (corresponding to the situation [c] in Fig. 1), which means in free air, the spectral difference will not be observed.

So, by comparing the acoustic spectra of the two microphones 2 and 4 the usage situation of the mobile phone 1 may be deduced.

As mentioned above, the secondary microphone 3 may be arranged in the same housing as the loudspeaker 2. However, trends towards multiple microphones per mobile phone are expected in order to enable e.g. directivity sensing for instance in the conferencing mode. Thus, the microphones enabling directivity sensing can be used to detect an object such as a human user's head in front of one of the microphones. That is to say, by appropriate sensor hardware arrangement, implementation of the invention may be reduced to simple signal processing by means of already existing hardware. This means, that signals provided by the microphones merely need to be evaluated and combined by means of the processor of the mobile device according to the method of the present invention.

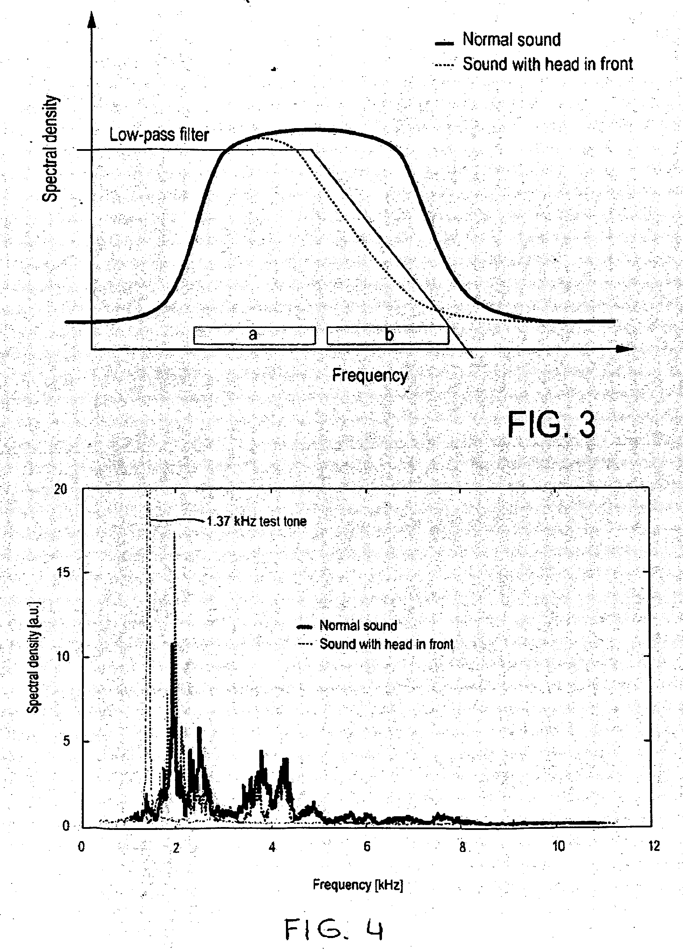

Now, reference is made to **Fig. 3** which is a schematic diagram of an acoustic low-pass filtering caused by a user's head in front of a microphone, e.g. the microphone 2 in Fig. 2. From the diagram, the spectral difference becomes apparent. The solid curve represents the spectrum of the human speech, typically between 500 Hz and 5 kHz. The effect of an element in front of the damped microphone is represented by the low-pass filtering curve, indicated by a solid line.

The low-pass behaviour can further be understood from the physical phenomenon that low frequencies can bend around objects whilst high frequencies cannot. Furthermore, damping of sound waves penetrating massive obstacles depends quadratically on their frequency. This is easily experienced, for instance, when a radio is heard from a neighbouring room: only the lower tones are transferred. In addition, high frequencies are easier absorbed by soft tissue like the human skin. This filtering behaviour transforms the acoustic spectrum into the dotted curve.

According to one embodiment, a simple signal processing operation consists in taking the amount of acoustic power above a certain cut-off frequency, for example, the power in region (b) and to divide that by the power in region (a+b), resulting in a normalization of the region (b) of the spectrum. The resulting value can be used as measurable indicator. The measurement may be relative to compensate for sound intensity variations, for example due to the speaking distance.

From some simple experiments the cut-off frequency of the acoustic low-pass filtering effect of a user's head in front of a microphone is found to be in the range of 1-3 kHz, typically around 2 kHz.

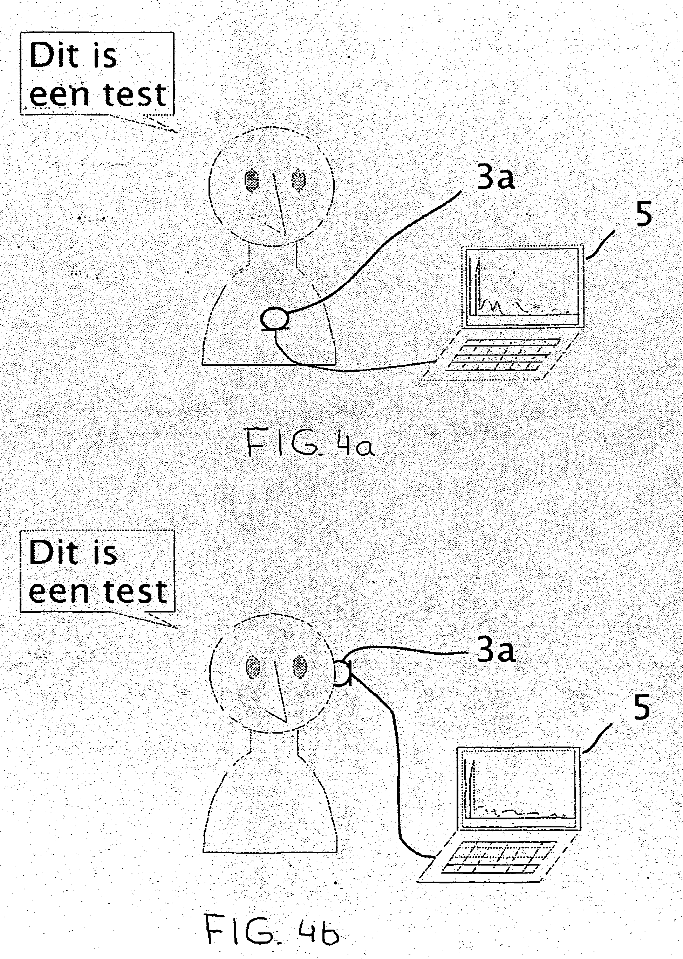

Now, reference is made to **Fig. 4** in which two exemplary measurement configurations depicted in **Fig. 4a** and **Fig. 4b** with a single microphone 3a are illustrated. In Fig. 4a there is no head adjacent to the microphone 3a and in Fig. 4b there is a head adjacent to the microphone 3a. The setup of this simple experiment to verify the effect the present invention is based on was performed with the microphone 3a of a (not depicted) computer monitor. A sound sample received by the microphone 3a was recorded with Windows Sound Recorder and was transformed into a frequency spectrum using the FFT function in MathCad running on a computer 5.

The dash-dotted graph depicted in Fig. 4 belongs to the received signal of a clean whistle tone. The clean whistle represents an undistorted sine-wave of 1370 Hz.

The solid curve in Fig. 4 corresponds to the spoken text "Dit is een test" at 50 cm distance of the uncovered microphone, i.e. representing a hands-free call with the mobile phone lying on a table. Finally, the dotted curve in Fig. 4 represents the same sample, but now measured with the cheek of the speaker in contact with the microphone opening.

A peak in the speech information is observed at around 2 kHz. Thus, by normalizing the signal volume variations the proximity sensing may be reduced to simply observation or monitoring of the ratio between lower and upper frequency band. The sound energy at this frequency received in the situation where the cheek is next to the microphone 3a (dotted curve) is higher than that corresponding to the situation where the microphone 3a is uncovered (solid curve), simply because the distance is smaller. At higher frequencies, above 2 kHz, the dotted curve is clearly below the solid curve, because the damping characteristics of the human tissue prevents the energy of higher frequencies from impinging on the microphone.

Now, a decision can be made based on the measurement, whether the front of the microphone 3a is covered. In the uncovered situation (solid curve, Fig. 4a), the power above 2.2 kHz comprises about 60% of the total power in the sound-sample. For the head-in-front case (dotted curve, Fig. 4b) this is only 30%. This clearly indicates the low-pass behaviour with a cut-off frequency around 2.2 kHz. Moreover, the difference can be used for deducing the actual use situation of the mobile phone.

It is noted, that in this experiment, two slightly different originating signals were sequentially measured with the same microphone 3a. It goes without saying, that in the proposed solution, two microphones 3a receiving the same originating signal are used. In that case the two acoustic signals are basically identical, making the decision more reliable.

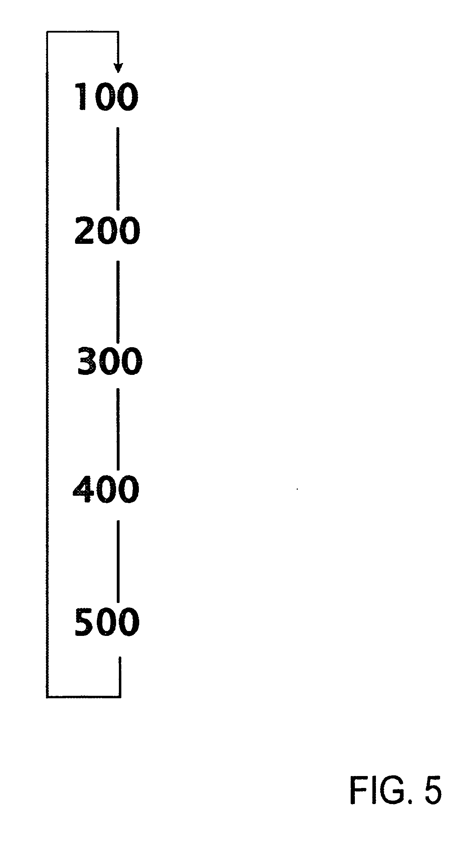

Finally yet importantly, the flow chart of **Fig. 5** illustrates the steps to be taken in accordance with the method of the present invention, which is especially useful in handheld speech transmission devices as discussed herein above.

In step 100 at at least two locations distant from each other, an acoustic signal is received. This acoustic signal may be the user's voice during a phone call or any present ambient noise with reasonable energy distribution in the spectrum of human voice, e.g. in the range of 500 Hz up to 5-8 kHz. One of the at least two receiving locations is to be positioned such that during a normal (i.e. no hands-free) phone call, it is at least partially covered by human tissue, e.g. the user's ear, and thus damped against sound impingement, or disturbed otherwise by the presence of the human head in the acoustic field.

In step 200, said received acoustic signals are converted into electric signals. Conversion of the acoustic signals may be performed by any appropriate transducing means such as electro-dynamic microphones, which may serve for several different functions in the device this method is employed in.

Subsequently, in the steps 300 to 500 from the spectral difference between the electric signals the actual proximity situation is deduced as follows

In step 300 the signals are divided into at least two spectral portions around the expected cut-off frequency of the acoustic low-pass filter effect, which the average coverage of the microphone applies to the received signal. This can be performed by any appropriate filtering means being adapted to split electrical signals into certain frequency bands.

In step 400, at least one value representing the energy of the spectral portion above the cut-off frequency of an acoustic signal is put into relation to a value representing the entire energy of said signal. As noted above, this step of normalization eliminates the effect different spectral constitution and/or volumes of the user's voice and/or the ambient noise would have on comparison of the electrical signals. This procedure is executed on each signal used for the comparison step. The normalised signal will be between 0 and 1 (meaning 0% up to 100% of the total spectral power is in the upper frequency band).

In step 500 the signals received by at least two acoustic transducers are compared regarding the energy contained in their spectral portion above the cut-off frequency. Since coverage of at least one microphone leads to a drop of energy especially at high frequencies of the received acoustic signal, it can be derived from a significant differential signal that the mobile phone is at the user's ear and the display functions can be switched off. In case the differential signal is not above a critical threshold value, this indicates that the mobile phone is not held close to the user's ear and the display functions are switched on again.

In an embodiment a fixed threshold is used. Prior experiments showed that a typical threshold level of 0.5 (50% power in the upper spectral band). In an alterative embodiment, the threshold level is determined adaptively, which means tracked dynamically.

Subsequently or depending of a certain event in the usage of the phone such as a user input, the method starts over at step 100.

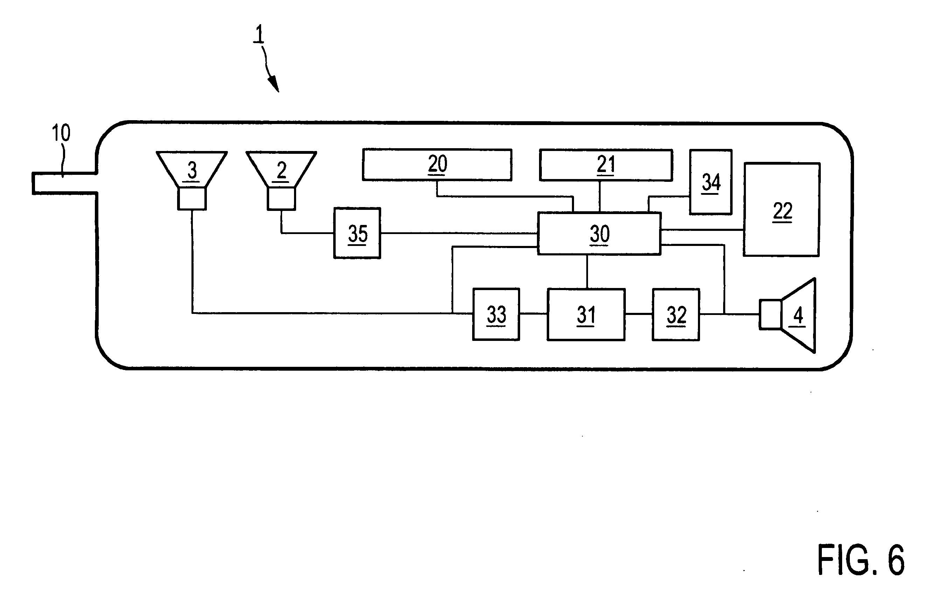

**Fig. 6** shows a block diagram of a typical mobile phone according to one aspect of the present invention. The antenna 10 on the left side indicates the upper side of the mobile phone 1, normally comprising the loudspeaker/receiver. Loudspeaker 2 via an amplifier 35 is connected to the processor 30 of the mobile phone 1 and is used to propagate the dialog partners' voice to the ear of the mobile phone user. In case of the hands-free-call the loudspeaker 2 is driven at drastically higher volumes if not another loudspeaker is provided for hands-free-call voice output.

Next to loudspeaker 2 there is provided a microphone 3, which is connected to processor 30 on the one hand and a normalizer 33 on the other hand. Its direct link to processor 30 is provided for the case that the speech signal is to be directly transmitted to processor 30 in order to either process it for speech controlled applications or to process it for propagation to the dialog partner at the other end of the line. Normalizer 33 pre-processes the signal received by microphone 3 for comparison with the acoustic signal received by microphone 4 in a comparing unit 31.

The normalization operation may be performed e.g. by dividing the portions of the spectra to be compared by a value representing the energy of the entire respective signal or any other appropriate procedure. Microphone 4 and normalizer 32 are linked and arranged to interact with comparing unit 31 and processor 30 similarly to microphone 3 and normalizer 33, thus re-explanation is omitted for sake of brevity.

In the storage 34 data corresponding to the operating system of the mobile phone, user data and instructions corresponding to the steps of the method according to the present invention are stored and accessible for processor 30. Connection and interaction of antenna and processor 30 in Fig. 6 are omitted since not being in the focus of the present invention.

In case the comparing unit 31 detects significant differences between the two signals passed by normalizer 33 and normalizer 32 it signalizes a normal-call-position (cf. Fig. 1 [b]) of the mobile phone to processor 30. In case comparing unit 31 does not detect a significant difference between the signals received from normalizer 33 and normalizer 32 it signalizes processor 30 that the phone is likely to be in a hands-free-call situation. Depending on the signal from comparing unit 31 the processor 30 can switch the operation mode of display 20, keypad 21 and any other wireless communication interface such as a WiFi-module 22 in order to match the present use case. Moreover, the processor may adjust the volume of a signal driving the loudspeaker 2 of the mobile phone in accordance to the detected mode of operation.

It is worth to be noted that display 20, keypad 21 and WiFi-module 22 are only meant as examples for additional features processor 30 can control in correspondence with the signal received by comparator 31. Similarly, the operation mode of sensors (gravity sensor, light sensor), Bluetooth module and software implemented routines can be adapted, preferably switched to less energy consuming modes during a call if not needed in the respective call mode. It is further worth to be noted that the above-described proximity sensor arrangement preferably is operating during a call, but is not limited thereto. Although the operating mode of display 20 and keypad 21 are of particular interest when the user is operating the mobile phone, several situations are imaginable, where the determination of the mobile phones position relative to the user is of interest even if the user is not directly interacting with the phone. For example, in the situation, that the phone is detected to be located in the hand or in the pocket of the user, routines like checking for new messages or emails can be executed at a higher rate than in a situation where the mobile phone is detected to be located for example, on a desk in the stand-by mode.

It shall further be noted that distribution of functions and features in a mobile phone applying the system and method according to the present invention can be re-located and differently distributed in the components and elements shown in Fig. 6, in other words, Fig. 6 is not meant to limit the scope of the present invention. Exemplary, display 20 and keypad 21 maybe embodied as a touch sensitive display and this way combined with each other.

Also should it be clear to a person skilled in the art, that most of the signal processing functions required for the implementation of the here described proximity senor arrangement and method may be implemented nearly as far as possible as software routines in the processor already present in the most mobile devices such as mobile phones.

It will be easily understood, that based on the use situation-related information provided by the proximity sensor arrangement and the method according to the present invention, several other functions can be activated/deactivated in order to adjust the mobile phone to the respective situation and its position. One example is the volume adjustment of the ringtone and other notifying sounds as well as disabling energy consuming screensavers. Another example is switching off the WiFi-function, if featured, in order to lower the electro-smog exposition of the users head.

Summarizing, a proximity sensor arrangement is provided comprising at least one first and at least one second acoustic transducer and at least one comparing means. The acoustic transducers are adapted to receive acoustic signals and convert the received acoustic signals into electric signals. The comparing means are adapted to compare the spectra received by the acoustic transducers. If the device comprising the proximity sensor arrangement is held at a user's ear, the signal received by the covered microphone is low-pass filtered due to human tissue and/or the presence of the human head, resulting in a spectral difference between several microphones.

For instance, if the device comprising the proximity sensor arrangement is a mobile phone that is held with its loudspeaker at the user's ear, the signal received by the covered microphone, that is according to the herein disclosed solution located close by or adjacent to the loudspeaker, is - due to effect of this use situation - low-pass filtered, which results in a spectral difference in comparison to the signal received at the microphone typically located at the opposite end of the mobile phone for reception of a user's voice during a conversation.

Furthermore a method is provided comprising the steps of receiving an acoustic signal at at least two locations distant from each other. In a second step, said received acoustic signals are converted into electric signals. Subsequently, the actual proximity and/or coverage situation is deduced from the spectral difference between the electric signals.

While the invention has been illustrated and described in detail in the drawings and foregoing description, such illustration and description are to be considered illustrative or exemplary and not restrictive; it is to be understood that the invention is not limited to the disclosed embodiments, but, on the contrary, is intended to cover various modifications and equivalent arrangements included within the scope of the appended claims. In particular, it shall be understood that if the term "microphone" is used, generally an acoustic transducer also capable to act as a loudspeaker might be employed. For example, an acoustic transducer in one moment can operate as a microphone and subsequently can operate as a loudspeaker. Other variations to the disclosed embodiments can be understood and effected by those skilled in the art in practicing the claimed invention from a study of the drawings, the disclosure, and the appended claims. In the claims, the word "comprising" does not exclude other elements or steps, and the indefinite article "a" or "an" does not exclude a plurality. A single means or other unit may fulfil the functions of several items recited in the claims. The mere fact that certain measures are recited in mutually different dependent claims does not indicate that a combination of these measures cannot be used to advantage. Any reference signs in the claims should not be construed as limiting the scope.

## Claims

1. A proximity sensor arrangement that is set-up for estimating whether an electronic mobile device (1) is placed next to an ear or in front of a user, the arrangement comprising:
at least one first acoustic transducer (2), in particular an acoustic sensor, for receiving an acoustic signal via a first transfer path;
at least one second acoustic transducer (4), in particular an acoustic sensor, for receiving the acoustic signal via a second transfer path; and
at least one comparing unit, **characterised in that**
the comparing unit is arranged to sense acoustical spectral damping of the acoustic signal caused by the adjacency of human tissue to the first acoustic transducer (2), by comparing a part of the spectrum above a predetermined cut-off frequency of the signal received by the first acoustic transducer (2) with a part of the spectrum above the predetermined cut-off frequency of the signal received by the second acoustic transducer (4).

2. A proximity sensor arrangement according to claim 1, further comprising respective normalization units adapted to normalize the energy of the parts of the spectrums above the predetermined cut-off frequency prior to passing it to the comparing unit.

3. A proximity sensor arrangement according to claim 1 or claim 2, wherein the comparing unit is arranged to compare values corresponding to the energy of the parts of the spectrums above the predetermined cut-off frequency of the received signals provided by the acoustic transducers.

4. A proximity sensor arrangement according to any of the preceding claims, wherein at least one third acoustic transducer (4), in particular an acoustic actor such as a loudspeaker, is located adjacent to the at least one first or at least one second acoustic transducer.

5. A proximity sensor arrangement according to any of the preceding claims, further comprising respective electric filter arrangements adapted to filter the respective signal received by the respective acoustic transducer, wherein the electric filter arrangements in particular being high pass filters, preferably with a cut-off frequency in the range of 1-3 kHz, most preferably with a cut-off frequency of 2 kHz.

6. A proximity sensor arrangement according to any of the preceding claims, wherein the at least two acoustic transducers are adapted to basically operate in the audible sound range, preferably between 500 Hz and 10 kHz, most preferably in the range between 500 Hz and 5 kHz.

7. A mobile phone **characterized in that** it comprises a proximity sensor arrangement according to any of the preceding claims.

8. A mobile phone (1) according to claim 7, wherein the first and second acoustic transducers (2, 4) are arranged on strategic positions with regard to the use situations of the mobile phone to be detected, and wherein the first transducer (2) is located within the mobile phone (1) close to a third transducer (3), in particular in the top part of the mobile phone (1), and the second transducer (4) is located in a predetermined distance to the first transducer (2), in particular in the lower part of the mobile phone (1), so that use situations such as hand-held and hands-free use of the mobile phone during a phone call can be sensed based on the degree of courage of the first transducer (2).

9. A method for proximity sensing that is set-up for estimating the degree of coverage of a first acoustic transducer located in an electronic mobile device during operation thereof, for estimating whether the device is placed next to an ear or in front of a user, the method comprising:
receiving an acoustic signal via a first transfer path with the first acoustic transducer and via a second transfer path with a second acoustic transducer located in a predetermined distance from the first acoustic transducer: and
deducing the actual degree of coverage, **characterised by** sensing acoustical spectral damping of the acoustic signal caused by the adjacency of human tissue, by comparing a part of the spectrum above a predetermined cut-off frequency of the signal received by the first acoustic transducer (2) with a part above the predetermined cut-off frequency of the spectrum of the signal received by the second acoustic transducer (4).

10. A method according to claim 9, comprising converting said received acoustic signals into electric signals.

11. A method according to claim 10, wherein deducing the actual degree of coverage comprises:
comparing at least a value representing the energy contained in said both electric signals, and
deciding on the actual coverage situation based on the result of said comparison.

12. A method according to any of claims 9 to 11, wherein the method further comprises normalizing the energy of the spectral parts above the predetermined cut-off frequency prior to the comparison.

13. A method according to claim 9 to 12, wherein, in the comparison, values corresponding to the energy of the parts above the predetermined cut-off frequency of the received signals provided by the acoustic transducers are compared.

14. A computer program product **characterized in that** it comprises insductions adapted to cause a programmable processor when executed on the processor to perform the method according to any of the claims 9 to 13.

15. The computer program product of claim 14 on a data carrier medium.

## Patentansprüche

1. Näherungssensoranordnung, die eingerichtet ist zu bestimmen, ob ein elektronisches Mobilgerät (1) nahe einem Ohr oder vor einem Benutzer angeordnet ist, wobei die Anordnung wie folgt umfasst:
zumindest einen ersten akustischen Wandler (2), insbesondere einen akustischen Sensor, zum Empfang eines akustischen Signals über einen ersten Übertragungsweg;
zumindest einen zweiten akustischen Wandler (4), insbesondere einen akustischen Sensor, zum Empfang des akustischen Signals über einen zweiten Übertragungsweg; und
zumindest eine vergleichende Einheit, **gekennzeichnet dadurch, dass**
die vergleichende Einheit angeordnet ist, um eine akustische Spektraldämpfung des akustischen Signals, hervorgerufen durch die Nähe von menschlichem Gewebe zum ersten akustischen Wandler (2), abzutasten, indem sie einen Teil des Spektrums oberhalb einer vorbestimmten Grenzfrequenz des vom ersten akustischen Wandler (2) empfangenen Signals mit einem Teil des Spektrums oberhalb der vorbestimmten Grenzfrequenz des vom zweiten akustischen Wandler (4) empfangenen Signals vergleicht.

2. Näherungssensoranordnung nach Anspruch 1, des Weiteren umfassend jeweilige Normalisierungseinheiten, die angepasst sind, um die Energie der Teile der Spektren oberhalb der vorbestimmten Grenzfrequenz zu normalisieren, bevor diese zur vergleichenden Einheit weitergeschickt wird.

3. Näherungssensoranordnung nach Anspruch 1 oder Anspruch 2, wobei die vergleichende Einheit angeordnet ist, um Werte zu vergleichen, die der Energie der Teile der Spektren oberhalb der vorbestimmten Grundfrequenz der empfangenen Signale, die von den akustischen Wandlern bereitgestellt werden, entsprechen.

4. Näherungssensoranordnung nach einem der vorstehenden Ansprüche, wobei zumindest ein dritter akustischer Wandler (4), insbesondere ein akustisches Gerät wie ein Lautsprecher, nahe bei dem zumindest einen ersten oder zumindest einen zweiten akustischen Wandler angeordnet ist.

5. Näherungssensoranordnung nach einem der vorstehenden Ansprüche, des Weiteren umfassend jeweilige elektrische Filteranordnungen, die angepasst sind, um das jeweilige Signal zu filtern, das vom jeweiligen akustischen Wandler empfangen wird, wobei die elektrischen Filteranordnungen insbesondere Hochpassfilter sind, vorzugsweise mit einer Grenzfrequenz im Bereich von 1-3 kH2, am bevorzugtesten mit einer Grenzfrequenz von 2 kHz.

6. Näherungssensoranordnung nach einem der vorstehenden Ansprüche, wobei die zumindest zwei akustischen Wandlers angepasst sind, um vorrangig im hörbaren Tonbereich, vorzugsweise zwischen 500 Hz und 10 kHz, am bevorzugtesten im Bereich zwischen 500 Hz und 5 kHz, zu arbeiten.

7. Mobiltelefon, **dadurch gekennzeichnet, dass** es eine Näherungssensoranordnung nach einem der vorstehenden Ansprüche umfasst.

8. Mobiltelefon (1) nach Anspruch 7, wobei der erste und der zweite akustische Wandler (2, 4) auf strategischen Positionen in Hinblick auf die Benutzungssituationen des zu detektierenden Mobiltelefons angeordnet sind, und wobei der erste Wandler (2) innerhalb des Mobiltelefons (1) nahe an einem dritten Wandler (3), insbesondere im oberen Teil des Mobiltelefons (1), angeordnet ist, und der zweite Wandler (4) in einem vorbestimmten Abstand zum ersten Wandler (2), insbesondere im unteren Teil des Mobiltelefons (1), angeordnet ist, so dass Benutzungssituationen wie die handgehaltene und handfreie Benutzung des Mobiltelefons während eines Telefongesprächs auf der Grundlage des Grads der Reichweite des ersten Wandlers (2) abgetastet werden können.

9. Verfahren zum Abtasten der Näherung, das eingerichtet ist, um den Grad der Reichweite eines ersten akustischen Wandlers, der in einer elektronischen Mobilvorrichtung während des Betriebs dessen angeordnet ist, zu bestimmen, um zu bestimmen, ob die Vorrichtung nahe dem Ohr oder vor dem Benutzer angeordnet ist, wobei das Verfahren wie folgt umfasst:
Empfangen eines akustischen Signals über einen ersten Übertragungsweg mit dem ersten akustischen Wandler und über einen zweiten Übertragungsweg mit einem zweiten akustischen Wandler, der in einem vorbestimmten Abstand vom ersten akustischen Wandler angeordnet ist; und
Ableiten des tatsächlichen Grads der Reichweite, **gekennzeichnet durch** das Abtasten einer akustischen Spektraldämpfung des akustischen Signals, hervorgerufen **durch** die Nähe von menschlichem Gewebe, indem ein Teil des Spektrums oberhalb einer vorbestimmten Grenzfrequenz des vom ersten akustischen Wandler (2) empfangenen Signals mit einem Teil oberhalb der vorbestimmten Grenzfrequenz des Spektrums des vom zweiten akustischen Wandler (4) empfangenen Signals verglichen wird.

10. Verfahren nach Anspruch 9, umfassend das Umwandeln der empfangenen akustischen Signale in elektrische Signale.

11. Verfahren nach Anspruch 10, wobei das Ableiten des tatsächlichen Grads der Reichweite wie folgt umfasst:
Vergleichen zumindest eines Werts, der für die in diesen beiden elektrischen Signalen enthaltene Energie steht, und
Bestimmen der tatsächlichen Reichweitensituation auf der Grundlage des Ergebnisses dieses Vergleichs.

12. Verfahren nach einem der Ansprüche 9 bis 11, wobei das Verfahren des Weiteren das Normalisieren der Energie der Spektralteile oberhalb der vorbestimmten Grenzfrequenz vor dem Vergleich umfasst.

13. Verfahren nach Anspruch 9 bis 12, wobei im Vergleich Werte, die der Energie der Teile oberhalb der vorbestimmten Grenzfrequenz der von den akustischen Wandlern bereitgestellten empfangenen Signale entsprechen, verglichen werden.

14. Computerprogrammprodukt, **dadurch gekennzeichnet, dass** es Instruktionen umfasst, die angepasst sind, um einen programmierbaren Prozessor zu veranlassen, wenn diese auf dem Prozessor ausgeführt werden, das Verfahren nach einem der Ansprüche 9 bis 13 durchzuführen.

15. Computerprogrammprodukt nach Anspruch 14 auf einem Datenträgermedium.

## Revendications

1. Agencement de capteurs de proximité configuré pour estimer si un dispositif mobile électronique (1) est placé à proximité d'une oreille d'un utilisateur ou en face de celui-ci, l'agencement comprenant :
au moins un premier transducteur acoustique (2), en particulier un capteur acoustique, destiné à recevoir un signal acoustique par le biais d'un premier trajet de transfert ;
au moins un deuxième transducteur acoustique (4), en particulier un capteur acoustique, destiné à recevoir le signal acoustique par le biais d'un second trajet de transfert ; et
au moins une unité de comparaison, **caractérisé en ce que**
l'unité de comparaison est conçue pour détecter un amortissement spectral acoustique du signal acoustique provoqué par le voisinage d'un tissu humain avec le premier transducteur acoustique (2), par comparaison d'une partie du spectre dépassant une fréquence de coupure prédéterminée du signal reçu par le premier transducteur acoustique (2) avec une partie du spectre dépassant la fréquence de coupure prédéterminée du signal reçu par le deuxième transducteur acoustique (4).

2. Agencement de capteurs de proximité selon la revendication 1, comprenant en outre des unités respectives de normalisation aptes à normaliser l'énergie des parties des spectres dépassant la fréquence de coupure prédéterminée avant de la transférer vers l'unité de comparaison.

3. Agencement de capteurs de proximité selon la revendication 1 ou la revendication 2, dans lequel l'unité de comparaison est conçue pour comparer des valeurs correspondant à l'énergie des parties des spectres dépassant la fréquence de coupure prédéterminée des signaux reçus fournis par les transducteurs acoustiques.

4. Agencement de capteurs de proximité selon l'une quelconque des revendications précédentes, dans lequel au moins un troisième transducteur acoustique (2), en particulier un dispositif acoustique comme un haut-parleur, est situé au voisinage de l'au moins un premier ou de l'au moins un deuxième transducteur acoustique.

5. Agencement de capteurs de proximité selon l'une quelconque des revendications précédentes, comprenant en outre des agencements de filtres électriques respectifs conçus pour filtrer le signal respectif reçu par le transducteur acoustique respectif, dans lequel les agencements de filtres électriques sont en particulier des filtres passe-haut, la fréquence de coupure étant de préférence dans la gamme de 1 à 3 kHz, plus préférentiellement à 2 kHz.

6. Agencement de capteurs de proximité selon l'une quelconque des revendications précédentes, dans lequel les au moins deux transducteurs acoustiques sont conçus pour fonctionner à la base dans la gamme de sons audibles, de préférence entre 500 Hz et 10 kHz, plus préférentiellement dans la gamme de fréquences comprises entre 500 Hz et 5 kHz.

7. Téléphone mobile, **caractérisé en ce qu'**il comprend un agencement de capteurs de proximité selon l'une quelconque des revendications précédentes.

8. Téléphone mobile (1) selon la revendication 7, dans lequel les premier et deuxième transducteurs acoustiques (2, 4) sont disposés à des positions stratégiques par rapport aux situations d'utilisation du téléphone mobile à détecter, et dans lequel le premier transducteur (2) est situé à l'intérieur du téléphone mobile (1) à proximité d'un troisième transducteur (3), en particulier dans la partie supérieure du téléphone mobile (1) et le deuxième transducteur (4) est situé à une distance prédéterminée du premier transducteur (2), en particulier dans la partie inférieure du téléphone mobile (1), de sorte que des situations d'utilisation, comme des utilisations en mains et en mains libres du téléphone mobile, pendant un appel téléphonique, peuvent être détectées sur la base du degré de couverture du premier transducteur (2).

9. Procédé de détection de proximité configuré pour estimer le degré de couverture d'un premier transducteur acoustique situé dans un dispositif mobile électronique pendant son fonctionnement, permettant d'estimer si le dispositif est placé à proximité d'une oreille d'un utilisateur ou en face de celui-ci, le procédé comprenant :
la réception d'un signal acoustique, par le biais d'un premier trajet de transfert, par le premier transducteur acoustique et, par le biais d'un second trajet de transfert, par un deuxième transducteur acoustique situé à une distance prédéterminée du premier transducteur acoustique ; et
la déduction du degré réel de couverture, **caractérisé par** la détection de l'amortissement spectral acoustique du signal acoustique provoqué par le voisinage d'un tissu humain, par comparaison d'une partie du spectre dépassant une fréquence de coupure prédéterminée du signal reçu par le premier transducteur acoustique (2) avec une partie dépassant la fréquence de coupure prédéterminée du spectre du signal reçu par le deuxième transducteur acoustique (4).

10. Procédé selon la revendication 9, comprenant la conversion desdits signaux acoustiques reçus en signaux électriques.

11. Procédé selon la revendication 10, dans lequel la déduction du degré réel de couverture comprend :
la comparaison d'au moins une valeur représentant l'énergie contenue dans lesdits deux signaux électriques, et
le fait de décider de la situation de couverture réelle sur la base du résultat de ladite comparaison.

12. Procédé selon l'une quelconque des revendications 9 à 11, dans lequel le procédé comprend en outre la normalisation de l'énergie de la partie du spectre dépassant la fréquence de coupure prédéterminée avant la comparaison.

13. Procédé selon les revendications 9 à 12, dans lequel, lors de la comparaison, les valeurs correspondant à l'énergie des parties dépassant la fréquence de coupure prédéterminée des signaux reçus fournies par les transducteurs acoustiques sont comparées.

14. Produit de programme informatique **caractérisé en ce qu'**il comprend des instructions adaptées pour amener un processeur programmable, lorsqu'il est exécuté sur le processeur, à mettre en oeuvre le procédé selon l'une quelconque des revendications 9 à 13.

15. Produit de programme informatique selon la revendication 14, situé sur un support d'informations.
